Europäisches Patentamt

European Patent Office

Office européen des brevets

(11) Publication number: **0 242 961**
**A1**

(12) # EUROPEAN PATENT APPLICATION

(21) Application number: **87301831.1**

(22) Date of filing: **03.03.87**

(51) Int. Cl.³: **G 05 B 15/02**
**G 06 F 5/06**

(30) Priority: **26.03.86 GB 8607461**

(43) Date of publication of application:
**28.10.87 Bulletin 87/44**

(84) Designated Contracting States:
**DE FR GB IT**

(71) Applicant: **ROLLS-ROYCE plc**
**65 Buckingham Gate**
**London, SW1E 6AT(GB)**

(72) Inventor: **Bousfield, Bruce Martin**
**136 Albert Road**
**Chaddesden Derby(GB)**

(74) Representative: **Dargavel, Laurence Peter**
**Rolls-Royce Limited Patents Department P.O. Box 31**
**MoorLane**
**Derby DE2 8BJ(GB)**

(54) **Control method and means.**

(57) A fast microprocessor (102) samples, through multiplexers (118a, 118b) repeated sequences of measured values (119a) and set values (119b) for a number of control channels. The fast microprocessor utilises a control programme to give control outputs (128) for each channel to regulate plant operation according to predetermined parameters. The parameters are input via a switchable two-part RAM (114) shared by the fast microprocessor and a general purpose microprocessor (104) linked to a key pad (108) through which new replacement parameters can be entered. When replacement parameters are required the fast microprocessor (102) swaps its inputs between the two parts of the RAM (114) so that each microprocessor uses the part previously used by the other, the swap being initiated by an instruction from the user via the keypad (108) but executed only by a swap signal from the fast microprocessor (102) timed to avoid interfering with the control program.

Fig.1a.

EP 0 242 961 A1

1.

## CONTROL METHOD AND MEANS

This invention relates to a means and a method for controlling plant or machine operation.

The control of some types of plant, e.g. vibration and fatigue test rigs, requires the use of proportional plus integral plus derivative (PID) controllers with a capability for changing the working parameters of a controller without interrupting the operation of the plant. If a large range of signal frequencies is to be measured in such plant, e.g. up to 400Hz, there are problems as regards the equipment which is readily available for such requirements. Although analogue controllers with an appropriate specification exist, they are rather cumbersome to tune and unsuited to remote setup by a supervisory computer. Digital controllers which can be more easily tuned, e.g. using a keyboard, are available for only much lower frequencies, up to approximately 2Hz.

One object of the present invention is to avoid the disadvantages of known analogue control systems by providing a convenient method and means for digital control, and especially one which is capable of controlling multiple channels up to considerably higher frequencies than this 2Hz limit.

2.

A further object of the invention is to permit the change of the working parameters for the control function in a convenient and trouble-free manner. In the operation of a PID controller as referred to above, the parameters concerned may include: proportional gain, integral time constant and derivative time constant.

According to one aspect of the invention, there is provided a method of plant or machine control wherein samples of a plurality of measured values in the plant or machinery are fed in cyclic sequence by multiplexing means to a central processing means and in coordination with a corresponding cyclic sequence of set values, and resultant control outputs are provided by the processing means for regulation of the operation of the plant or machinery in accordance with at least one predetermined parameter, the inputting of the measured and set values to the central processing means and the outputting of the resulting control outputs being subject to a common timing sequence which also actuates the inputting of replacement parameters to the central processing means in a predetermined interval between cyclic sequences of said inputs and outputs.

According to another aspect of the invention, there is provided a method of plant or machine control wherein a plurality of values are measured in the plant or machinery and are sent in a cyclic sequence to a data processing means which is also supplied with a corresponding series of set values and, in dependence upon one or more predetermined control parameters, resultant control outputs are provided by the data processing means for regulation of the operation of the plant or machinery, the or each parameter used for the evaluation of the outputs being provided from one part of a switchable store while a further part of the store is held available to be supplied with at least one replacement parameter for said one or more control parameters, the data processing means swapping between the two parts of the switchable store when said at least one replacement parameter is to be taken into use for the evaluation of the control outputs.

The invention also comprehends means for performing the method of controlling plant or machine operation according to the invention.

By way of example, the invention will be described in more detail with reference to the accompanying schematic drawings, in which:

Figs. la and lb show an outline circuit diagram for the control means of the invention, and

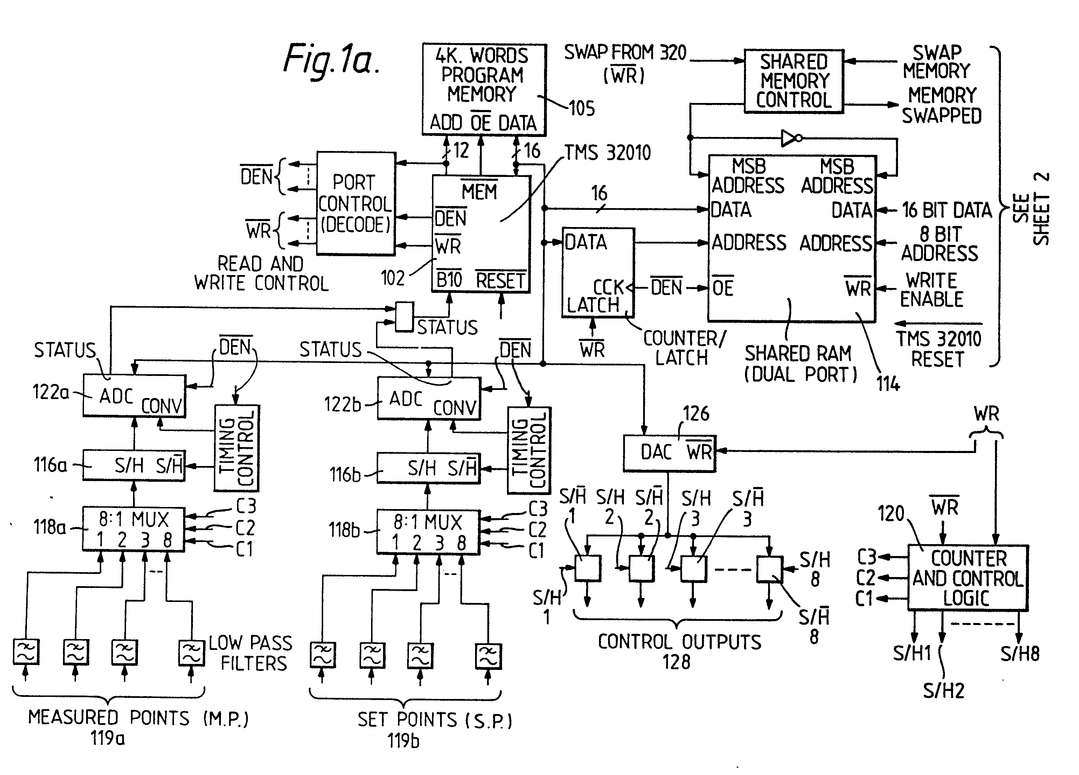

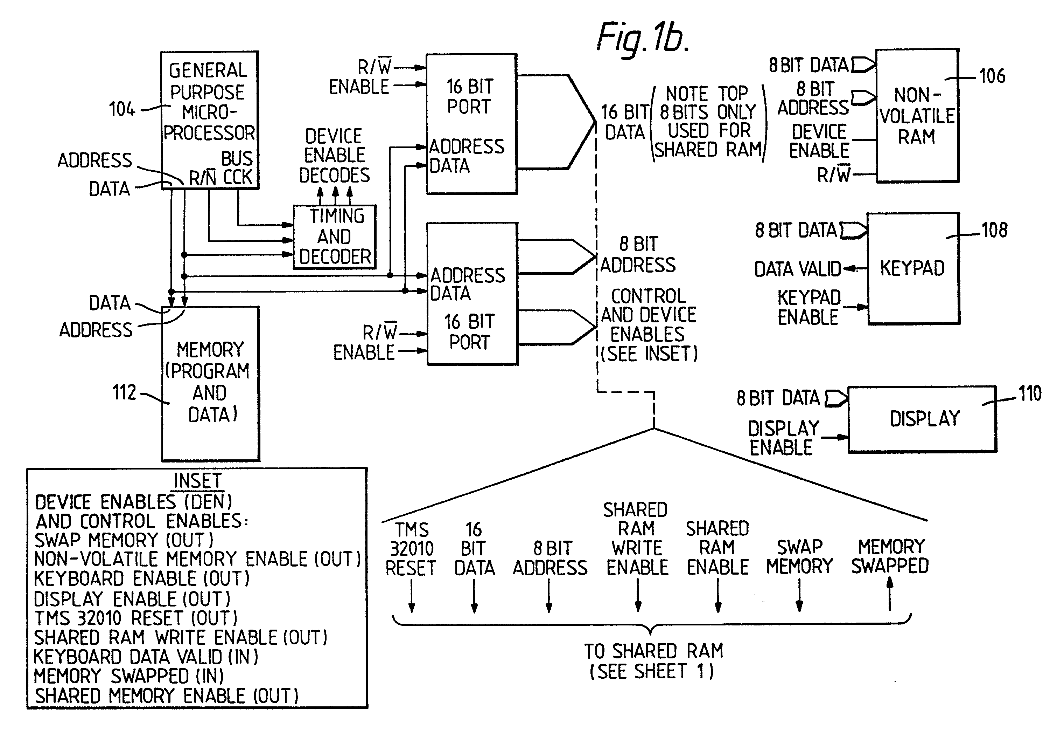

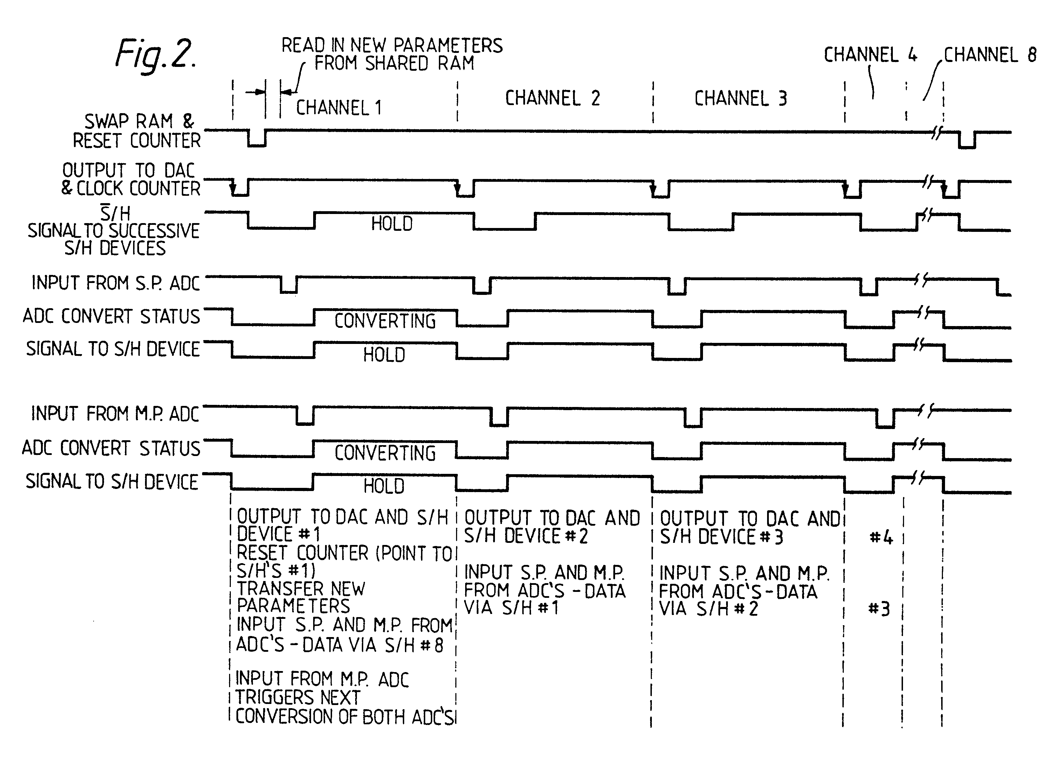

Fig. 2 shows a part of the input/output timing used in the circuit of Fig. 1.

4.

The apparatus illustrated in Figs. 1a and 1b comprises two micro-processors 102, 104, the first having a high-speed operational capability (such as the TMS 32010 manufactured by Texas Instruments) and providing the central processing unit for monitoring and controlling the plant operation, while the processor 104 can be any general purpose unit. The function of the first processor 102 is to operate, in accordance with a series of control parameters stored in a non-volatile RAM 106, a program stored in ROM 105. The program performs a PID algorithm on each of a number of channels which supply a set point value and a measured value. The processor 102 thereby provides a control output to each channel accordingly. In the example given there are set and measured value inputs for up to eight channels and the processor 102 is required to be able to change each channel input and output at up to 4KHz to provide a control bandwidth of up to about 400Hz (depending upon the plant with which the apparatus is operating), the processor 102 itself operating all data inputting to it and outputting from it.

The second processor 104 and a shared RAM 114 provide an interface between keypad 108 and processor 102 by means of which the user can enter new control parameters, both the current parameters operating with

5.

the processor 102 and any new parameters entered by the processor 104 but not yet in use being shown on a conventional display device 110.  When new parameters have been entered, the processor 104 scales and modifies them to suit the algorithm being performed by the processor 102 in preparation for passing the data to that processor, where they will replace the parameters currently being used for performing the algorithm.  Communication from the processor 104 to the processor 102 is through a shared RAM 114.  The current parameters and any intended replacement parameters are held in such a manner that the control flow is not disrupted in any way when an existing set of parameters is replaced, as will be described in more detail below.

Respective groups of low-pass filters 119a, 119b allow inputs to two 8:1 multiplexers 118a, 118b, these devices indicating a series of actual measured values and a series of set point values for the variables being monitored in the plant.  These values are sampled by respective sample-and-hold devices 116a, 116b, then digitised by two analogue-to-digital converters 122a, 122b and are passed on in digital form to the processor 102.  The multiplexers 118a, 118b are controlled by timing and control logic 120, which includes a 3-bit counter, to cycle the inputs to the ADCs 122 through the

6.

8 channels of input pairs. The data is thus supplied to the processor 102 in the form of cyclic sequences of digital values representing in each case the actual and set points of a particular variable.

In generally known manner, in accordance with the algorithm performed by the processor 102 and the control parameters held in the shared RAM 114, the set and measured values are compared and a corresponding cyclic sequence of control values is outputted through a digital-analogue converter 126 to a series of eight sample-and-holds 128, through which the eight analogue signals are outputted for the control of the plant. The timing and control logic 120 also controls the outputs, by triggering in sequence each of the sample-and-holds 128 for the corresponding series of output channels so that the respective DAC outputs are delivered in turn to their individual channels. Because the timing and control logic 120 controls both input multiplexers 118a, 118b and the output sample-and-holds 128, it is ensured that the data input and output channels are synchronised with each other.

The parameters inputted by the user to the processor 104 are transferred to and held in a further RAM 112. On an enter command from the keypad 108, the parameters are transferred by the processor 104 to the

RAM 114 provided between the two processors, which is a shared dual-port RAM having two blocks of memory of identical form.  The arrangement is such that at any moment only one of the blocks is addressable by the processor 102 and the other by the processor 104, although it is possible to switch the blocks over between the two processors so that the parameters inputted into one block by the processor 104 become accessible to the processor 102 and the other block is addressed by the processor 104.

The use of the dual-port RAM permits a change of parameters while the control function of the processor 102 is running.  When it is processing the channel inputs using the parameter data of one block of the RAM 114, changed parameters entered into the other block via the keyboard 108 are simply held in readiness there and as they are also held in the RAM 112 they can be checked on the visual display 110 before any further action is taken.  A swap command from the keyboard prepares for the processor 102 to switch to that block of the RAM holding the new parameters, but does not trigger that action; the changeover is made only when a memory swap pulse is outputted by the processor 102 itself in its operating sequence.

The changeover therefore occurs only at a fixed point in the control loop of the processor 102, in particular the swap pulse being outputted only after the end of each sampling and evaluating sequence. The integrity of the data processing can therefore be maintained, since the user does not have to synchronise the instant of switching. He simply generates the memory swap command in the general purpose processor when he is ready to make the change and the memory control logic holds that command until, at the chosen point in the control loop, the memory swap pulse is outputted. Because the swap command is already held by it, the swap pulse toggles the addresses of the RAM 114, whereby the main operating processor 102 is given access to the block carrying the new parameters while the block with the old parameters is addressed by the processor 104 and the user is able to introduce other changes into it without disturbing the revised data accessed by the processor 102. An acknowledgement signal is issued when the swap takes place so as to indicate to the processor 104 that the system is working correctly and to instruct it to remove the swap command from the processor 102. The memory swap also serves to reset the counters/multiplexer, i.e. swap and reset are the same pulse.

Fig. 2 illustrates the input/output timing operated by the processor 102. The sequence shown will be described from the output of the swap and pulse to swap the addresses of the two blocks in the RAM 114 and to reset the counter in the timing and logic control 120. For a period of no more than 50 us after that pulse, the new paramaters are read in from the RAM 114 to the processor 102.

(i) Channel 1 starts with input from the set point ADC 122b and then from the actual point ADC 122a. The inputs are derived from the sample and hold values of the preceding channel and the second input triggers both ADCs to convert the channel 1 values now held in the associated sample and hold devices.

(ii) As the conversions in the ADCs proceed, the algorithm is applied in the processor 102 to the digital values already inputted. To compensate for the fact that the input data for the operation in the processor 102 will have come from the preceding channel, i.e. the eighth channel in this case, the input connectors are displaced -1 in relation to the algorithm in the processor.

(iii) There is a test to confirm the ADCs have finished their conversions, whereupon there is an output control output pulse to the DAC 126. The data on which the DAC is operating is still that of the previous channel and the output to the chosen sample and hold 128 appears only when the logic has moved onto the next channel; to compensate, therefore, the output connectors are displaced +1 in relation to the algorithm in the processor.

(iv) The negative edge of the output control output pulse also triggers the clock counter of the timing and logic control to move the input sample and hold devices 119 to the second channel. The conversions of the channel 1 data in the ADCs will have been completed before this stage and the digital values are held in readiness for inputting to the processor. The positive edge of the same control pulse triggers the outputting of the value converted in the DAC 126 to the appropriate sample and hold.

(v) The second channel procedure now starts, as in (i) above with the converted inputs for channel 1 from the set point and actual point ADCs 122 and the second channel data from the sample and holds 119 being read by the ADCs 122 after the input from the ADC 122a.

The counter reset operates again at the beginning of each succeeding cycle; as the input multiplexers will have returned to the first channel by the clock counter itself, the resetting is redundant but it serves to check the integrity of the system, e.g. in the case in which noise has clocked the counter to open the wrong channel.

The timing provides that a control output does not occur before both the input and output sample-and-holds have finished sampling. While the ADCs must complete their conversion operation before the DAC can output the control values, the speed of operation can be increased by ensuring that the DAC output is triggered as soon as possible after the digital conversion, and is then followed immediately by input from each ADC to initiate their next conversion.

The memory swap and counter reset pulse is included in the timing and control cycle of the processor 102 at a fixed point in an interval established within the repeat period of the control cycle. As explained above, the swap/reset pulse to the RAM 114 switches the addresses of the two memory blocks if the swap command has already been given from the processor 104. As an illustrative example, if it is required to produce one control output signal per channel at an interval not greater than 250 us, then to cope with inputs having frequencies of up to 400Hz in each channel an interval of some 25 us is required between swap channel pulses, leaving a longer period of about 50 us at the end of the sampling of the eight channels. This is sufficient to introduce revised parameters that have been set up using the processor 104 in the manner described earlier, and because it occurs between sampling and evaluating cycles it is possible to ensure that the swap has no effect on the running of the processor 102.

By the use of the data processing means in the manner described, it is thus possible to control a number of channels simultaneously at frequencies considerably higher than is attainable by known means using digital data processing. The maximum frequency of about 400Hz for an eight-channel controller illustrates the capacity of the arrangement described, but it can also be used to good effect with lower signal frequencies and, depending on the availability of suitable hardware it can be designed to cope with higher frequencies. Different channels can be sampled at different frequencies. Thus, for 8 channels, using suitable software it is possible to obtain sampling rates between samples in the range 250 us to 8 seconds in increments of 250 us.

The processing of the signals can be conducted entirely independently for each channel, and it is possible to employ different sets of parameters to evalute the control outputs of different channels. The arrangement is thus completely flexible in that it can perform one or more independent control functions in parallel on a number of machines or plant, or it can control a larger number of different variables in the
operation of a single plant or machine.

14.

Claims:-

1. A method of plant or machine control characterised in that samples of a plurality of measure values (119a) in the plant or machinery are fed in cyclic sequence by multiplexing means (118a) to a central processing means (102) and in coordination with a corresponding cyclic sequence of set values (119b), and resultant control outputs (128) are provided by the processing means (102) for regulation of the operation of the plant or machinery in accordance with at least one predetermined parameter, the inputting of the measured and set values (119a,119b) to the central processing means (102) and the outputting of the resulting control outputs (128) being subject to a common timing sequence which also actuates the inputting of replacement parameters to the central processing means in a predetermined interval between cyclic sequences of said inputs and outputs.

2. A method according to claim 1 characterised in that the parameters are supplied to the central processing means (102) through a store (114), and replacement parameters are transferred to the central processing means (102) by a command actuated in said common timing sequence dependent on the presence of a user-controlled command signal in the store (114).

3. A method according to claim 1 characterised in that said parameters are supplied to the central processing unit (102) via a store (114) which holds the replacement parameters in a part of the store that is not accessible by the central processing means (102) until the parameters are replaced, whereupon that part of the store (114) inputs its data to the central processing means (102) while a further part of the store holding parameters previously accessed by the central processing means is isolated therefrom and is addressable for the inputting of further replacement parameters.

4. A method according to any one of claims 1 to 3 characterised in that the respective series of measured and set values (119a,119b) are received as analogue values and the values of each series are sampled in sequence for conversion to digital form to be inputted to the central processing means (102).

5. Control means for plant or machines, characterised in that it comprises data processing means provided with inputs (119a,119b) for a series of set and measured values for chosen variables, multiplexing means (118a,118b) for the cyclic sampling of the values of the respective variables, central processing means (102) for processing the values in accordance with at least one predetermined parameter to produce a series of control outputs (128) in respective control channels to regulate said variables, means for inputting the measured and set values and the outputting of said control outputs in a common timing sequence, means (114) for holding

16.

replacement parameters for the central processing means (102) and means (102,104,108,114) for inputting said replacement parameters in an interval between successive cycles of said common timing sequence.

6. Control means according to claim 5 characterised by a store (114) for holding said replacement parameters, user-operated input means (104,108) connected to said store for enabling said inputting of the replacement parameters to the central processing unit (102) and for inputting further parameters to the store (114).

7. Control means according to claim 6 characterised in that said store (114) comprises two discrete parts in which current and replacement parameters can respectively be held, and means are provided for switching the connections of said two parts when current parameters are to be replaced by revised parameters.

8. Control means according to any one of claims 5 to 8 characterised in that analogue input means (119a,119b) are provided to said multiplexing means (118a,118b) and means (122a,122b) are provided for the conversion of the sample inputs to digital form before said processing.

9. A method of plant or machine control characterised in that a plurality of values (119a) are measured in the plant or machinery and are sent in a cyclic sequence to a data processing means (102) which is also supplied with a corresponding series of set values (119b) and, in dependence upon one or more predetermined control parameters, resultant control outputs (128) are provided by the data processing means (102) for regulation of the operation of the plant or machinery, the or each parameter used for the evaluation of the outputs (128) being provided from one part of a switchable store (114) while a further part of the store is held available to be supplied with at least one replacement parameter for said one or more control parameters, the data processing means (102) swapping between the two parts of the switchable store (114) when said at least one replacement parameter is to be taken into use for said evaluation of the control outputs (128).

10. A method according to claim 9 characterised in that the switching between the parts of the store (114) is enabled by a command externally of said data processing means (102).

11. A method according to claim 9 or claim 10 characterised in that said switching is actuated by a command from the data processing means (102) at a predetermined point in the cyclic sequence.

12. A method according to any one of claims 9 to 11 characterised in that the switching occurs in the cyclic sequence at a predetermined interval between the evaluation of successive pairs of associated measured and set values (119a,119b).

13. Control means for plant or machinery characterised in that it comprises data processing means (102) provided with inputs for a plurality of measured values (119a) in a cyclic sequence and in synchronisation with a plurality of set values (119b) for the variables being measured, means for providing control outputs (128) from said values for the operation of said plant or machinery in dependence upon one or more control parameters, a store (114) being provided for inputting the parameter or parameters to the said processing means (102), said store (114) comprising two parts with separate addresses, and means (102,104,108,114) being provided for swapping between said addresses, whereby the data processing means (102) can obtain the parameter or parameters from one part of said switchable store (114) while leaving the second part of the store (114) addressable by means (104,108) for inputting replacement parameters and can access said replacement parameters by said address-swapping means.

14. Means according to claim 13 characterised in that the data processing means (102) comprises a central timing and control for the inputting of the measured and set values (119a,119b) and the outputting of the control values (128), and for actuating said swapping between the addresses of said store (114), whereby said swapping occurs at a predetermined interval relative to said cyclic sequence.

15. Means according to claim 13 or claim 14 characterised in that the means for inputting the replacement parameters comprises a central processing

19.

unit (104) provided with a manual input means (108) and a display (110) for showing the parameters inputted thereby.

16. Means according to claim 14 together with claim 15 characterised in that means are provided for operation of said central processing unit (104) through said manual input means (108) to cause said actuation of the switching of addresses to be enabled or inhibited.

Fig.1a.

CONTROL OUTPUTS
128

MEASURED POINTS (M.P.)
119a

SET POINTS (S.P.)
119b

0242961

Fig.1b.

INSET
DEVICE ENABLES (DEN)
AND CONTROL ENABLES:
SWAP MEMORY (OUT)
NON-VOLATILE MEMORY ENABLE (OUT)
KEYBOARD ENABLE (OUT)
DISPLAY ENABLE (OUT)
TMS 32010 RESET (OUT)
SHARED RAM WRITE ENABLE (OUT)
KEYBOARD DATA VALID (IN)
MEMORY SWAPPED (IN)
SHARED MEMORY ENABLE (OUT)

TMS 32010 RESET | 16 BIT DATA | 8 BIT ADDRESS | SHARED RAM WRITE ENABLE | SHARED RAM ENABLE | SWAP MEMORY | MEMORY SWAPPED

TO SHARED RAM
(SEE SHEET 1)

Fig.2.

READ IN NEW PARAMETERS
FROM SHARED RAM

CHANNEL 4    CHANNEL 8

CHANNEL 1    CHANNEL 2    CHANNEL 3

SWAP RAM &
RESET COUNTER

OUTPUT TO DAC
& CLOCK COUNTER

S̄/H
SIGNAL TO SUCCESSIVE
S/H DEVICES                    HOLD

INPUT FROM S.P. ADC

ADC CONVERT STATUS          CONVERTING

SIGNAL TO S/H DEVICE           HOLD

INPUT FROM M.P. ADC

ADC CONVERT STATUS          CONVERTING

SIGNAL TO S/H DEVICE           HOLD

OUTPUT TO DAC AND S/H    OUTPUT TO DAC AND    OUTPUT TO DAC AND
DEVICE #1                S/H DEVICE #2        S/H DEVICE #3          #4
RESET COUNTER (POINT TO
S/H'S #1)                INPUT S.P. AND M.P.  INPUT S.P. AND M.P.
TRANSFER NEW             FROM ADC'S - DATA    FROM ADC'S - DATA
PARAMETERS              VIA S/H #1           VIA S/H #2             #3
INPUT S.P. AND M.P. FROM
ADC'S - DATA VIA S/H #8

INPUT FROM M.P. ADC
TRIGGERS NEXT
CONVERSION OF BOTH ADC'S

0242961

3/3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 066 532 (SIEMENS) * Figure 1; page 6, line 31 - page 8, line 5 * | 1-16 | G 05 B 15/02 G 06 F 5/06 |
| Y | EP-A-0 081 358 (BURROUGHS) * Abstract; claim 16 * | 1-16 | |
| Y | IFAC CONTROL SCIENCE AND TECHNOLOGY FOR THE PROGRESS OF SOCIETY, PROCEEDINGS OF THE 8th TRIENNIAL WORLD CONGRESS OF THE INTERNATIONAL FEDERATION OF AUTOMATIC CONTROL, 24th-28th August 1981, Kyoto, JP, Editor H. AKASHI, vol. 4, pages 2111-2116, Pergamon Press, Oxford, GB; A. SUMI et al.: "Microprocessor-basedd general-purpose PID controller" * Page 2111, right-hand column, lines 10-31; figure 2; page 2112, left-hand column, lines 12-30 * | 1-16 | |
| A | ADVANCES IN INSTRUMENTATION, vol. 37, part 3, 1982, pages 1217-1234, ISA, Research Triangle Park, NC, US; N.D. JOHNSON: "Intelligent man-machine interface key to high performance single-loop control" * Figure 1, page 1221, lines 7-61 * | 1-16 | TECHNICAL FIELDS SEARCHED (Int. Cl.4)<br><br>G 05 B<br>G 06 F |

The present search report has been drawn up for all claims

| Place of search | Date of completion of the search | Examiner |
|---|---|---|
| THE HAGUE | 18-06-1987 | KOLBE W.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82